# EUROPEAN PATENT APPLICATION

(11) **EP 3 501 678 A1**
(43) Date of publication of application: **26.06.2019**
(21) Application number: 18460059.1
(22) Date of filing: 28.09.2018
(51) Int. Cl.: B09B 3/00, C04B 7/28, C04B 22/06, C04B 28/02, C04B 28/06, C04B 14/30, C04B 18/06, C04B 18/08, C04B 18/10

(54) **METHOD FOR REDUCTION OF CHLORIDE LEACHING RATE FROM MINERAL MIXTURES COMPRISING WASTE WITH HIGH CONCENTRATIONS OF SOLUBLE CHLORIDES**

(30) Priority: 28.09.2017 PL 42299817
(71) Applicant: Mo-Bruk S.A., 33-322 Korzenna (PL)
(72) Inventor: Kotwica, Lukasz, 31-419 Kraków (PL); Deja, Jan, 31-324 Kraków (PL); Pichór, Waldemar, 32-083 Balice (PL); Rózycka, Agnieszka, 31-344 Kraków (PL); Golek, Lukasz, 30-128 Kraków (PL); Mokrzycki, Józef, 33-322 Korzenna (PL); Mokrzycka, Anna, 33-300 Nowy Sacz (PL)

(57) **Abstract**

**Summary of the description**

The subject of the invention is a method for reduction of chloride leaching rate from mineral mixtures comprising waste with high concentrations of soluble chlorides, where the said method is solidification and stabilisation of waste.

The method according to the invention consists in that waste with high concentrations of soluble chlorides, characterized by that waste containing calcium hydroxide and soluble chlorides at concentrations of up to 35%, and generated by waste to energy processing of industrial or municipal waste or by another thermal process generating such waste, is mixed with an aluminium-bearing material which is a source of activated aluminium oxide, with a waste to aluminium-bearing material ratio between 1:1 and 11:1, until a homogeneous mixture is obtained. If required, which depends on the moisture content in the waste and the expected / required consistence of the mixture, its two components are also mixed with water at a ratio from 0 to 40% of the mixture mass. The order of mixing the mixture components is arbitrary; however, it is most preferable to first mix the waste with a high concentration of soluble chlorides with the aluminium-bearing material, and then to mix the mixture with water, if any water is required, and the resulting fresh mixture is solidified by hydrothermal processing at a temperature between 40 and 200°C for 6 to 24 hours in an atmosphere of steam (water vapour).

## Description

The subject of the invention is a method for reduction of chloride leaching rate from mineral mixtures comprising waste with high concentrations of soluble chlorides, where the said method is solidification and stabilisation of waste.

The properties of calcium chloroaluminate (Friedel's salt) are known in literature, among others in: U.A. Birnin-Yauri, F.P. Glasser "Friedel's salt, Ca2Al(OH)6(Cl,OH)2H2O: its solid solutions and their role in chloride binding" Cement and Concrete Research, 28 (1998) pp. 1713-1723. The literature describes the role of Friedel's salt in the process of chloride migration in grout, mortar and concrete. The conditions of durability of calcium chloroaluminate in cement grout is also known in literature, including in: A.K. Suryavanshi, R.N. Swamy "Stability of Friedel's salt in carbonated concrete structural elements" Cement and Concrete Research, 26 (1996), pp. 729-741. However, no publication was found which describes the use of hydrated calcium chloroaluminates to reduce the leaching rate of chlorides from mixtures containing chloride-rich waste, especially the waste generated by waste incineration plants.

Types of waste are listed in the Polish Regulation of the Minister of Environment of 9 December 2014 on the Waste Catalogue (Dz.U. 2014.0.1923), which contains a list of over 900 types of waste classified into groups and subgroups in relation to the source of waste generation (origin). Waste generated by waste to energy conversion processes which often reveal high chloride concentrations, is classified in Waste Catalogue group 19, which includes Waste Code 190107* ("solid wastes from gas treatment") and Waste Code 190115* ("boiler dust containing hazardous substances"). Some of the waste generated in waste to energy conversion processes, including Waste Code 190107*, does not even meet the requirements for disposal at hazardous waste landfills. This generates significant problems with the management of this waste.

The objective of the authors of this invention is to develop a technology that will enable effective reduction of the leaching rate of the chlorides from mineral mixtures containing waste generated by waste to energy processing or other thermal processes which generate waste with high concentrations of chlorides. The objective of the technology is to enable recovery and industrial management of the waste, whereas a "high concentration of chlorides" in waste is already considered to be a few percent; in practice, however, it is ten-odd percent or more, up to 35%.

The essence of the invention is the method for reduction of chloride leaching rate from mineral mixtures comprising waste with high concentrations of soluble chlorides. The method which consists in the fact that waste containing calcium hydroxide and soluble chlorides at concentrations of up to 35%, and generated by waste to energy processing of industrial or municipal waste or by another thermal process generating such waste, is mixed with an aluminium-bearing material which is a source of activated aluminium oxide, with a waste to aluminium-bearing material ratio between 1:1 and 11:1, until a homogeneous mixture is obtained. If required, which depends on the moisture content in the waste and the expected / required consistence of the mixture, its two components are also mixed with water at a ratio from 0 to 40% of the mixture mass. The order of mixing the mixture components is arbitrary; however, it is most preferable to first mix the waste with a high concentration of soluble chlorides with the aluminium-bearing material, and then to mix the mixture with water, if any water is required. The quantity of water added to the mixture depends on the desired consistence, which in turn is dictated by the applied method of moulding and densification of the mixture.

The ratio of waste to aluminium-bearing material determines the compressive strength of the solidified and cured (hardened) mixture. The higher the share of the aluminium-bearing material in the mixture, the higher is the compressive strength of the resulting mixture. The compressive strength can be adjusted from several to several dozen MPa.

With the foregoing components mixed, the fresh mixture is solidified in such a way that it is subjected to hydrothermal treatment at a temperature between 40 and 200 °C for 6 to 24 hours in an atmosphere of steam (water vapour). Preferably, if the fresh mixture has a plastic or liquid consistency, its hydrothermal treatment is carried out after the mixture has been moulded. Preferably, if the fresh mixture has a moist or dense plastic consistency, its hydrothermal treatment is carried out after dumping the mixture into a heap.

The order of mixing of the individual components of the mixture is arbitrary, but it is most preferable to first mix the waste with a high concentration of soluble chlorides with the aluminium-bearing material, and then to mix the mixture with water, if any water is required. The primary dry mixing of the components facilitates homogenization of the mixture and prevents overheating the mixture, if the waste emits heat during processing.

Preferably, the waste with a high concentration of soluble chlorides is dust, fly ash or bottom ash from waste incineration plants, including Waste Code 190107* specified in the Polish Regulation of the Minister of Environment of 9 December 2014 on the Waste Catalogue (Dz.U. 2014.0.1923), which is solid waste from gas treatment in Waste Group 19 (Material from waste and water treatment) and Waste Subgroup 1901 (Incineration or pyrolysis of waste), and most preferably, the waste is in the form of dust, given its grain size. The form of dust allows for a better mixing of mixture components, which beneficial on the technological process, as the mixture is very well homogenized, and this in turn is beneficial to the reaction of the reactants in the mixture.

Preferably, granulated blast furnace slag or bottom ash from incineration of industrial or municipal waste, or kaolin, i.e. calcinated clay rich in kaolinite, or blast furnace cement with a high blast furnace slag content, e.g. CEM III/B, is used as the aluminium-bearing material.

Preferably, before the hydrothermal treatment stage, sodium hydroxide (NaOH) is added to the reaction mixture in an amount between 0.5% and 10% per the amount of the aluminium-bearing material. Sodium hydroxide is an activator for the aluminium-bearing raw material in the mixture and improves the efficiency of the reaction.

Preferably, prior to mixing waste containing high concentrations of soluble chlorides with the remaining components of the mixture, foreign inclusions, especially sinter, unburned parts, minerals, ferrous and non-ferrous scrap, is removed, and this is most preferably done by sifting the waste for the mixture through a screen.

Preferably, before the solidification stage of the fresh mixture of the components, a chloride-free or low-chloride material, i.e. with approximately 1% of the chloride content and the quantity of which ranges from 0:1 to 5:1 by the total weight of the waste and the aluminium-bearing material, is added as an inert material to the mixture of the aluminium-bearing material with fine-grain waste containing a high concentration of soluble chlorides, and this addition is done after or most preferably before the addition of water. This additive improves the strength of the material that will be produced by the process and can also be beneficial to the moulding of the material.

Preferably, quartz sand is added to the mixture as the inert material, most preferably with a grain size ≤ 2 mm, or bottom ash and fly ash from combustion of coal and biomass, or bottom ash from waste incineration. Due to environmental considerations, the most preferable additive being the inert material is bottom ash from waste incineration, which facilitates management of waste generated by waste incineration processes. If the bottom ash contains inclusions, for example metal scrap, it is necessary to separate the inclusions.

The mixture is prepared in mixers the type of which is in commonplace use in the concrete manufacturing industry. The waste is charged to a mixer with the optional addition of the inert material, and both are initially mixed to produce a homogeneous mixture. Next, water is fed to the mixture as required above to produce a homogeneous mixture of the required consistence.

The resulting material can either be granulated or moulded, depending on the consistence of the mixture.

The key feature of the method according to the invention is to conduct the process under hydrothermal treatment conditions, i.e. treatment with steam (water vapour) for a period between 6 and 24 hours. The hydrothermal treatment determines the synthesis of Friedel's salt or Kuzel's salt, in which chlorine is chemically bound and its leaching rate should be significantly reduced. The lack of this hydrothermal treatment would cause the mixture to react differently.

The solution according to the invention allows to process waste, which has so far caused problems in its processing and transport, into a compact material with strength characteristics which permit forming or moulding the material to a wide extent, depending on the composition of the solidified mixture of the material. The main benefit of solidification of waste with this method is a reduction in the leaching rate of chlorides. An additional advantage is that Portland cement, which is usually used as a binding material in the applications related to the one included in this method, can be eliminated from the formulation of the mixture in this method.

The intended effect, according to the invention, is due to the pozzolana reaction between the activated oxides of silicon and aluminium contained in the aluminium-bearing material, which is the source of active alumina and can be bottom ash (e.g. blast furnace slag or bottom ash from waste incineration), or calcinated clay rich in kaolinite (kaolin), and calcium hydroxide contained in the waste with a high concentration of soluble chlorides.

As a result, two types of reaction products are formed in the mixture. The first product of reaction of silicon oxide with calcium hydroxide in the presence of water is non-stechiometric hydrated calcium silicates, or tobermorite if higher processing temperatures are applied to the mixture. The hydrated calcium silicates have binding properties and endow consistency and strength to the mixture. The aluminium contained in bottom ash (slag) or calcinated clay reacts with calcium hydroxide and the chloride and sulphate ions contained in the waste to form hydrated calcium chloroaluminates and aluminium calcium chlorosulphates classified in the group of double layered hydroxides (mainly Friedel's salt or Kuzel's salt). These compounds allow permanent immobilization of chloride and sulphate ions, consisting in the incorporation of chlorine and sulphate ions into the structure of a chemical compound (especially Friedel's and/or Kuzel's salts), resulting in the desired reduction in the leaching rate of these ions from mineral matrices.

The subject of the invention is explained in detail with the following examples of practical implementation.

### Example 1.

Solidified mixture containing Waste Code 19 01 07* with the composition listed in Table 1, metakaolin (calcined kaolinite-rich clay), and quartz sand.

**Table 1. Composition of a waste containing a high concentration of soluble chlorides, Waste Code 19 01 07*, used in Examples 1 and 2.**

| **Component** | **Content [%]** |
|---|---|
| SiO₂ | 2.03 |
| Al₂O₃ | 0.43 |
| Fe₂O₃ | 0.55 |
| Na₂O | 3.15 |
| K₂O | 0.75 |
| CaO | 67.45 |
| MgO | 0.39 |
| TiO₂ | 0.14 |
| SO₃ | 5.09 |
| P₂O₅ | 0.07 |
| Cl | 18.43 |
| Br | 0.14 |
| F | 0.08 |

**Mix proportions:**

| | |
|---|---|
| Waste Code 19 01 07* | 300 kg |
| Meta-kaolin (calcinated kaolinite-rich clay) | 300 kg |
| Quartz sand ≤ 2 mm | 1350 kg |
| Tap water | 400 kg |

The waste with the composition shown in Table 1 and in the amount of 300 kg, together with metakaolin (calcinated kaolin-rich clay) (300 kg) and quartz sand at a grain size ≤ 2 mm (1350 kg) were mixed in a planetary mixer for 30 seconds, followed by addition of water (400 kg) to the mixture was added, and the whole contents mixed for 2 more minutes. The consistence, density and air content of the fresh mixture were then tested and determined in order to evaluate the workability of the fresh mixture as required from the technological perspective of the method. Next, samples sized 2.5 x 2.5 x 10 cm each were moulded. The samples (divided into three groups, A, B and C) were held for 12 hours in moulds, placed in a chamber a constant temperature of 60°C, an atmosphere saturated with steam (water vapour). After 12 hours of curing, the samples in group A passed strength testing and the remaining samples (groups B and C) were taken out of their moulds and placed in an autoclave, where samples in group B were treated at 120°C for 8 hours, and samples in group C were treated at 180°C for 8 hours. Afterwards, the samples of all groups passed compression testing.

**Properties of the fresh mixture:**

| | |
|---|---|
| Consistence, PN-EN 1015-3 | 140 mm |
| Density, PN-EN 1015-5 | 1980 kg/m³ |
| Air content, PN-EN 1015-6 | 3.5% |

**Compressive strength after treatment:**

| | |
|---|---|
| Group A samples: 12 h @ 60°C | 10.7 MPa |
| Group B samples: 12h @ 60°C + 8h @ 120°C | 12.6 MPa |
| Group C samples: 12h @ 60°C + 8h @ 180°C | 7.2 MPa |

Chloride leaching rate for the material obtained after the heat treatment: Test reference: PN-EN 12457-4.

| | |
|---|---|
| Group A samples: 12 h @ 60°C | 71% |
| Group B samples: 12h @t 60°C + 8h @ 120°C | 57% |
| Group C samples: 12h @t 60°C + 8h @ 180°C | 68% |

The standard leaching rate of chlorides assumed for waste recovery or neutralization is 100%. Nearly all chloride compounds are readily soluble substances, which means that they are leach out of the matrices virtually in 100% and pose a potential environmental hazard to soil and water. It is evident that the materials resulting from the method being the subject of invention shown in this example provide a significant reduction in the leaching rate of chlorides in cured (hardened) matrices.

### Example 2.

Solidified mixture containing Waste Code 19 01 07* with the composition listed in Table 1, meta-kaolin (calcinated kaolinite-rich clay), and quartz sand.

**Mix proportions:**

| | |
|---|---|
| Waste Code 19 01 07* | 550 kg |
| Meta-kaolin (calcinated kaolinite-rich clay) | 50 kg |
| Quartz sand ≤ 2 mm | 1350 kg |
| Tap water | 220 kg |

The waste with the composition shown in Table 1 and in the amount of 550 kg, together with metakaolin (calcinated kaolin-rich clay) (50 kg) and quartz sand at a grain size ≤ 2 mm (1350 kg) were mixed in a planetary mixer for 30 seconds, followed by addition of water (220 kg) to the mixture was added, and the whole contents mixed for 2 more minutes. The consistence, density and air content of the fresh mixture were then tested and determined in order to evaluate the workability of the fresh mixture as required from the technological perspective of the method. Next, samples sized 2.5 x 2.5 x 10 cm each were moulded. The samples (divided into three groups, A, B and C) were held for 12 hours in moulds, placed in a chamber a constant temperature of 60°C; an atmosphere saturated with steam (water vapour). After 12 hours of holding, the samples in group A passed strength testing and the remaining samples groups B and C were taken out of their moulds and placed in an autoclave, where samples in group B were treated at 120°C for 8 hours, and samples in group C were treated at 180°C for 8 hours. Afterwards, the samples of all groups passed compression testing.

**Properties of the fresh mixture:**

| | |
|---|---|
| Consistence, PN-EN 1015-3 | 140 mm |
| Density, PN-EN 1015-5 | 2010 kg/m3 |
| Air content, PN-EN 1015-6 | 4.0% |

**Compressive strength after treatment:**

| | |
|---|---|
| Group A samples: 12 h @ 60°C | 2.3 MPa |
| Group B samples: 12h @ 60°C + 8h @ 120°C | 4.8 MPa |
| Group C samples: 12h @ 60°C + 8h @ 180°C | 3.2 MPa |

Chloride leaching rate for the material obtained after the heat treatment: Test reference: PN-EN 12457-4.

| | |
|---|---|
| Group A samples: 12 h @ 60°C | 47% |
| Group B samples: 12h @t 60°C + 8h @ 120°C | 40% |
| Group C samples: 12h @t 60°C + 8h @ 180°C | 43% |

The standard leaching rate of chlorides assumed for waste recovery or neutralization is 100%. It is evident that the materials resulting from the method being the subject of invention shown in this example provide a significant reduction in the leaching rate of chlorides in cured (hardened) matrices.

### Example 3.

Solidified mixture containing Waste Code 19 01 07* with the composition listed in Table 2, as ground (Blaine surface area: 5000 cm²/g), bottom ash (slag) from incineration of Waste code 19 01 11* with the composition listed in Table 3, and quartz sand.

**Table 2. Composition of waste, Waste Code 19 01 07*, used in Example 3.**

| **Component** | **Content [%]** |
|---|---|
| SiO₂ | 2.78 |
| Al₂O₃ | 0.46 |
| Fe₂O₃ | 1.33 |
| Na₂O | 18.38 |
| K₂O | 2.44 |
| CaO | 35.68 |
| MgO | 0.28 |
| TiO₂ | 0.25 |
| SO₃ | 3.69 |
| P₂O₅ | 0.18 |
| Cl | 32.83 |
| Br | 0.09 |
| F | 0.36 |

**Table 3. Composition of bottom ash (slag), Waste Code 19 01 11***

| **Component** | **Content [%]** |
|---|---|
| SiO₂ | 36.61 |
| Al₂O₃ | 8.95 |
| Fe₂O₃ | 16.45 |
| Na₂O | 11.08 |
| K₂O | 0.61 |
| CaO | 14.22 |
| MgO | 1.80 |
| TiO₂ | 3.29 |
| SO₃ | 2.19 |
| P₂O₅ | 1.16 |
| Cl | 1.20 |
| Br | 0.10 |
| F | 0.00 |

**Mix proportions:**

| | |
|---|---|
| Waste Code 19 01 07* | 180 kg |
| Ground bottom ash (slag), Waste Code 19 01 11* | 450 kg |
| Quartz sand ≤ 2 mm | 1350 kg |
| Tap water, | 225 kg |

The waste with the composition shown in Table 2 and in the amount of 180 kg, together with the bottom ash (slag) from waste incineration (Waste Code 19 01 11*) (450 kg, see Table 3 for the composition) and quartz sand at a grain size ≤ 2 mm (1350 kg) were mixed in a planetary mixer for 30 seconds, followed by addition of water (225 kg) to the mixture was added, and the whole contents mixed for 2 more minutes. The consistence, density and air content of the fresh mixture were then tested and determined in order to evaluate the workability of the fresh mixture as required from the technological perspective of the method. Next, samples sized 2.5 x 2.5 x 10 cm each were moulded. The samples (divided into three groups, A, B and C) were held for 12 hours in moulds, placed in a chamber a constant temperature of 60°C, an atmosphere saturated with steam (water vapour). After 12 hours of holding, the samples in group A passed strength testing and the remaining samples groups B and C were taken out of their moulds and placed in an autoclave, where samples in group B were treated at 120°C for 8 hours, and samples in group C were treated at 180°C for 8 hours. Afterwards, the samples of all groups passed compression testing.

**Properties of the fresh mixture:**

| | |
|---|---|
| Consistence, PN-EN 1015-3 | 115 mm |
| Density, PN-EN 1015-5 | 1950 kg/m³ |
| Air content, PN-EN 1015-6 | 3.2% |

**Compressive strength after treatment:**

| | |
|---|---|
| Group A samples: 12 h @ 60°C | 5.4 MPa |
| Group B samples: 12h @ 60°C + 8h @ 120°C | 32.7 MPa |
| Group C samples: 12h @ 60°C + 8h @ 180°C | 15.8 MPa |

Chloride leaching rate for the material obtained after the heat treatment: Test reference: PN-EN 12457-4.

| | |
|---|---|
| Group A samples: 12 h @ 60°C | 48% |
| Group B samples: 12h @t 60°C + 8h @ 120°C | 37% |
| Group C samples: 12h @t 60°C + 8h @ 180°C | 35% |

The presented solution according to the invention is a novel application of slag, or bottom ash, from waste incineration as a binding material (binder). This application provided a new binding material, comprising ground bottom ash (slag) from waste incineration and solid waste from gas treatment as an activator for the bottom ash (slag).

The standard leaching rate of chlorides assumed for waste recovery or neutralization is 100%. It is evident that the materials resulting from the method being the subject of invention shown in this example provide a significant reduction in the leaching rate of chlorides in cured (hardened) matrices.

### Example 4.

Aggregate produced from Waste Codes 19 01 13*, 19 01 12 and 19 01 11*, containing chlorides and sulphates as listed in Table 4, cement CEM III/B, NaOH, and water.

**Table 4. Chloride and sulphate soluble content in the bottom ash (slag) and fly ash, Waste Codes 19 01 13*, 19 01 12 and 19 01 11***

| **Parameter** | **19 01 13*** | **19 01 12 and 19 01 11*** |
|---|---|---|
| Cl⁻ [mg/l] | 9,532 | 3,700 |
| SO₄²⁻ [mg/l] | 12,399 | 555 |
| TDS [mg/l] | 7,912 | 45,013 |

**Mix proportions:**

| | |
|---|---|
| Waste Code 19 01 13* | 300 kg |
| Mixture of Waste Codes 19 01 12 and 19 01 11* | 5000 kg |
| Cement, CEM III/B | 700 kg |
| NaOH | 50 kg |
| Water | 850 kg |

The bottom ash (slag) was screened to remove foreign inclusions before the process. The components were dispensed into the mixer, in which they were blended with the binding material and water to obtain an appropriate consistence of the resulting material. The activator in the form of sodium hydroxide was also added at this stage. The resulting mixture was subjected to 16 hours of hydrothermal treatment at a temperature of 50°C in the atmosphere of steam (water vapour). The resulting aggregate was then tested to produce a chemical analysis, with its results shown in Table 5.

**Table 5. Chloride and sulphate soluble content and TDS in the resulting aggregate.**

| **Parameter** | **Aggregate** |
|---|---|
| Cl⁻ [mg/l] | 1,708 |
| SO₄²⁻ [mg/l] | 783 |
| TDS [mg/l] | 4,896 |

A comparison of the values in Table 4 to those in Table 5 revealed a significant reduction of the concentrations of chlorides and sulphates in the material.

### Example 5.

Aggregate produced from waste with the Waste Codes and composition listed in Table 6, cement CEM III/B, and water.

**Table 6. Soluble content of chlorides and sulphates in the waste.**

| **Parameter** | **19 01 13*** | **19 01 12** |
|---|---|---|
| Cl⁻ [mg/l] | 11,586 | 1,704 |
| SO₄²⁻ [mg/l] | 17,008 | 5,048 |

**Mix proportions:**

| | |
|---|---|
| Waste Code 19 01 13* | 1000 kg |
| Waste Code 19 01 12 | 1000 kg |
| Cement, CEM III/B | 200 kg |
| Water | 320 kg |

The bottom ash (slag) was screened to remove foreign inclusions before the process. The components were dispensed into the mixer, in which they were blended with the binding material and water to obtain an appropriate consistence of the resulting material. The resulting mixture was subjected to 12 hours of hydrothermal treatment at a temperature of 50°C in the atmosphere of steam (water vapour). The resulting aggregate was then tested to produce a chemical analysis, with its results shown in Table 7.

**Table 7. Chloride and sulphate soluble content in the resulting aggregate.**

| **Parameter** | **Aggregate** |
|---|---|
| Cl⁻ [mg/l] | 4,253 |
| SO₄²⁻ [mg/l] | 7,305 |

A comparison of the values in Table 6 to those in Table 7 revealed a significant reduction of the concentrations of chlorides and sulphates in the material.

The solution according to the invention allows to reduce the environmental impact of waste with a high concentration of soluble chlorides. An appropriate selection of the quality and quantity of the mixture of materials allows, following an appropriate hydrothermal treatment, chemical binding the chlorides in compounds which are relatively poorly soluble; this reduces the leaching rate of the chlorides. This allows for an improved waste management and a higher flexibility of converting waste into commercially viable products.

The materials obtained with the method according to this invention will be used commercially as construction and reclamation materials; however, due to the legal regulations in force in Poland, they cannot be materials qualified for permanent occupation by humans and animals, or materials for storage of food. As a result of the technology used by this method, aggregate can be produced, for example granulate with the following applications:
- Road base courses: an aggregate for stabilisation with cement or mechanical stabilization;
- Constructions of embankments and banks;
- Road paving;
- Reclamation of degraded, unfavorably transformed and mining areas (by backfilling open and underground workings);
- Reclamation of landfills.

## Claims

1. The method for reduction of chloride leaching rate from mineral mixtures comprising waste with high concentrations of soluble chlorides, **characterized by that** waste containing calcium hydroxide and soluble chlorides at concentrations of up to 35%, and generated by waste to energy processing of industrial or municipal waste or by another thermal process generating such waste, is mixed with an aluminium-bearing material which is a source of activated aluminium oxide, with a waste to aluminium-bearing material ratio between 1:1 and 11:1, until a homogeneous mixture is obtained. If required, which depends on the moisture content in the waste and the expected / required consistence of the mixture, its two components are also mixed with water at, a ratio from 0 to 40% of the mixture mass. The order of mixing the mixture components is arbitrary; however, it is most preferable to first mix the waste with a high concentration of soluble chlorides with the aluminium-bearing material, and then to mix the mixture with water, if any water is required, and the resulting fresh mixture is solidified by hydrothermal processing at a temperature between 40 and 200°C for 6 to 24 hours in an atmosphere of steam (water vapour).

2. The method as claimed in claim 1 **characterized by that** if the fresh mixture has a plastic or liquid consistency, its hydrothermal treatment is carried out after the mixture has been moulded.

3. The method as claimed in claim 1 **characterized by that** if the fresh mixture has a moist or dense plastic consistency, its hydrothermal treatment is carried out after dumping the mixture into a heap.

4. The method as claimed in claim 1 **characterized by that** the waste with a high concentration of soluble chlorides is fly ash or bottom ash from waste incineration plants, including Waste Code 190107* specified in the Polish Regulation of the Minister of Environment of 9 December 2014 on the Waste Catalogue (Dz.U. 2014.0.1923), which is solid waste from gas treatment, and most preferably, the waste is in the form of dust.

5. The method as claimed in claim 1 **characterized by that** granulated blast furnace slag or bottom ash from incineration of waste, or kaolin, i.e. calcinated clay rich in kaolinite, or blast furnace cement with a high blast furnace slag content, e.g. CEM III/B, is used as the aluminium-bearing material.

6. The method as claimed in claim 1 **characterized by that** before the hydrothermal treatment stage, sodium hydroxide (NaOH) is added to the reaction mixture in an amount between 0.5% and 10% per the amount of the aluminium-bearing material.

7. The method as claimed in claim 1 **characterized by that** prior to mixing waste containing high concentrations of soluble chlorides with the remaining components of the mixture, foreign inclusions, especially sinter, unburned parts, minerals, ferrous and non-ferrous scrap, is removed, and this is most preferably done by sifting the waste for the mixture through a screen.

8. The method as claimed in claim 1 **characterized by that** before the solidification stage of the fresh mixture of the components, a chloride-free or low-chloride material, i.e. with approximately 1% of the chloride content and the quantity of which ranges from 0:1 to 5:1 by the total weight of the waste and the aluminium-bearing material, is added as an inert material to the mixture of the aluminium-bearing material with fine-grain waste containing a high concentration of soluble chlorides, and this addition is done after or most preferably before the addition of water.

9. The method as claimed in claim 8 **characterized by that** quartz sand is added to the mixture as the inert material, most preferably with a grain size ≤ 2 mm.

10. The method as claimed in claim 8 **characterized by that** bottom ash and fly ash from combustion of coal and biomass is added to the mixture as the inert material.

11. The method as claimed in claim 8 **characterized by that** bottom ash from waste incineration is added to the mixture as the inert material, whereas if the bottom ash contains inclusions, for example metal scrap, the inclusions are separated before adding the bottom ash to the mixture.
